# EUROPÄISCHE PATENTSCHRIFT

(11) **EP 3 655 304 B1**
(45) Veröffentlichungstag und Bekanntmachung des Hinweises auf die Patenterteilung: **11.08.2021**
(21) Anmeldenummer: 18740125.2
(22) Anmeldetag: 29.06.2018
(51) Int. Cl.: B61H 7/08, B60T 13/74, F16D 63/00

(54) **GLIEDERMAGNETSCHIENENBREMSVORRICHTUNG EINES SCHIENENFAHRZEUGS MIT VERLÄNGERTEN SCHENKELN DER ZWISCHENGLIEDER**
MAGNETIC BRAKE FOR A RAIL VEHICLE WITH ELONGATED LEGS OF THE MAGNET ELEMENTS
FREIN MAGNÉTIQUE POUR UN VÉHICULE FERROVIAIRE AVEC DES BRANCHES LATÉRALES ALLONGÉES DES PIÈCES POLAIRES

(30) Priorität: 17.07.2017 DE 102017006734
(43) Veröffentlichungstag der Anmeldung: 27.05.2020
(73) Patentinhaber: Knorr-Bremse Gesellschaft mit beschränkter Haftung, 2340 Mödling (AT)
(72) Erfinder: KASSAN, Michael, 2751 Steinabrückl (AT)
(74) Vertreter: Wiedemann, Markus
(86) Internationale Anmeldenummer: PCT/EP2018/067537
(87) Internationale Veröffentlichungsnummer: WO 2019/015934

(56) Entgegenhaltungen:
- EP-A1- 2 192 019
- AT-B- 183 104
- AT-B- 305 362
- DE-A1- 2 720 815
- US-A- 4 144 954

## Beschreibung

Die vorliegende Erfindung betrifft eine Gliedermagnetschienenbremsvorrichtung eines Schienenfahrzeugs, gemäß dem Oberbegriff von Anspruch 1 sowie ein Schienenfahrzeug mit einer solchen Gliedermagnetschienenbremsvorrichtung gemäß Anspruch 9.

Die krafterzeugende Hauptkomponente einer elektrischen Magnetschienenbremse ist der Bremsmagnet. Er ist im Prinzip ein Elektromagnet, bestehend aus einer sich in Schienenrichtung erstreckenden, von einem Magnetspulenkörper getragenen Magnetspule und einem hufeisenförmigen Magnetkern, welcher den Grund- oder Trägerkörper bildet. Der hufeisenförmige Magnetkern bildet an seiner der Fahrzeugschiene zugewandten Seite Polschuhe aus. Der in der Magnetspule fließende Gleichstrom bewirkt eine magnetische Spannung, die in dem Magnetkern einen magnetischen Fluss erzeugt, der sich über den Schienenkopf kurzschließt, sobald der Bremsmagnet mit seinen Polschuhen auf der Schiene aufliegt. Dadurch kommt eine magnetische Anziehungskraft zwischen Bremsmagnet und Schiene zustande. Durch die kinetische Energie des bewegten Schienenfahrzeugs wird die Magnetschienenbremse über Mitnehmer entlang der Schiene gezogen. Hierbei entsteht durch die Gleitreibung zwischen Bremsmagnet und Schiene in Verbindung mit der magnetischen Anziehungskraft eine Bremskraft. Durch den Reibkontakt mit der Schiene entsteht an den Polschuhen des Bremsmagneten Reibverschleiß, welcher ein maximales Verschleißmaß nicht überschreiten darf, da ansonsten der Magnetspulenkörper beschädigt wird.

Prinzipiell kann man nach dem konstruktiven Aufbau zwei verschiedene Arten von Magneten unterscheiden.

In einer ersten Ausführungsform ist der Bremsmagnet ein Starrmagnet, mit dem zwei magnetische Polschuhe verschraubt werden, die durch eine unmagnetische Leiste in Längsrichtung getrennt sind. Dies dient zur Vermeidung eines magnetischen Kurzschlusses innerhalb des Bremsmagneten. Die Polschuhe sind an den der Fahrzeugschiene zugewandten Stirnflächen der Seitenwangen ausgebildet. Starrmagneten werden meist im Nahverkehr bei Straßen- und Stadtbahnen eingesetzt.

Weiterhin sind bei den hier in Frage stehenden Gliedermagnetschienenbremsvorrichtungen Bremsmagneten, sogenannten Gliedermagneten, bekannt, bei welchen der Magnetspulenkörper Trennwände und dazwischen angeordnete Kammern aufweist. In den Kammern zwischen den Trennwänden sind Magnetkerne begrenzt beweglich gehalten, die sich während des Bremsvorgangs ausrichten, um Unebenheiten am Schienenkopf besser folgen zu können. In diesem Fall sind die Polschuhe an den der Schiene zugewandten Stirnflächen der Magnetkerne ausgebildet. Gliedermagneten werden standardmäßig im Vollbahnbereich eingesetzt.

Die Größe der Bremskraft einer Magnetschienenbremse ist u.a. vom magnetischen Fluss des Magnetkreises, d.h. auch von der Geometrie des Magnetkerns oder Magnetkerne, der magnetischen Durchflutung und den Reibverhältnissen zwischen Bremsmagnet und Schiene abhängig.

Eine Gliedermagnetschienenbremsvorrichtung ist aus DE 10 2004 018 008 B3 bekannt. Eine gattungsgemäße Gliedermagnetschienenbremsvorrichtung wird in DE 27 20 815 A1 beschrieben. AT 183 104 B beschreibt eine Magnetschienenbremse, bei welcher den Magnetfluss aufnehmende, im Querschnitt U-förmige Einzelglieder begrenzt beweglich nebeneinander gesetzt sind und AT 305 362 eine Magnetschienenbremse, bei welcher die Enden der Einzelglieder abgestuft sind.

Demgegenüber liegt die Aufgabe der Erfindung darin, eine Gliedermagnetschienenbremsvorrichtung der eingangserwähnten Art derart weiterzubilden, dass die von ihr ausgeübte Bremskraft möglichst groß ist. Weiterhin soll auch ein Schienenfahrzeug mit einer solchen Gliedermagnetschienenbremsvorrichtung zur Verfügung gestellt werden.

Diese Aufgabe wird durch die in den Patentansprüchen 1 und 9 gekennzeichneten Vorrichtungen gelöst.

Weitere vorteilhafte Ausgestaltungen und Weiterbildungen der Erfindung ergeben sich aus den abhängigen Ansprüchen.

### Offenbarung der Erfindung

Die Erfindung geht aus von einer Gliedermagnetschienenbremsvorrichtung eines Schienenfahrzeugs mit einem Bremsmagneten, wobei der Bremsmagnet einen Magnetspulenkörper sowie zwei mit dem Magnetspulenkörper starr verbundene Endglieder und mehrere jeweils mit dem Magnetspulenkörper begrenzt beweglich verbundene und in Längsrichtung des Magnetspulenkörpers gesehen hintereinander angeordnete Zwischenglieder aufweist, und wobei zwischen zwei benachbarten Zwischengliedern jeweils eine Trennwand angeordnet ist, und wobei ein Zwischenglied einen in einer senkrecht zur Längsrichtung des Magnetspulenkörpers angeordneten Querschnittsebene gesehen hufeisenförmigen Magnetkern mit einem Steg und zwei sich von dem Steg weg erstreckende Schenkel aufweist, wobei an jeweils einem zu einer Schiene weisenden Ende eines Schenkels ein zum Reibkontakt mit der Schiene vorgesehener Polschuh ausgebildet ist.

Der Magnetspulenkörper trägt bevorzugt eine oder mehrere Spulenwicklungen einer magnetischen Spule.

Weiterhin ist vorgesehen, dass bei wenigstens einem Schenkel eines Magnetkerns wenigstens eines Zwischenglieds zumindest ein zur Schiene weisender Abschnitt des Schenkels ein zur Schiene weisendes Ende wenigstens einer benachbarten oder angrenzenden Trennwand in Längsrichtung des Magnetspulenkörpers gesehen untergreift

Mit anderen Worten erstreckt sich in Längsrichtung des Magnetspulenkörpers gesehen der Abschnitt des Schenkels von einer zum Schenkel weisenden ersten Seitenfläche der Trennwand nach Untergreifen von deren zur Schiene weisendem Ende bis wenigstens in eine Ebene, welche die zweite, von dem Schenkel weg weisende Seitenfläche der Trennwand beinhaltet.

Bevorzugt kann der Abschnitt des Schenkels die wenigstens eine benachbarte oder angrenzende Trennwand in Längsrichtung des Magnetspulenkörpers gesehen um ein Stück weit überragen, d.h. dass sich in Längsrichtung des Magnetspulenkörpers gesehen der Abschnitt des Schenkels von der zum Schenkel weisenden ersten Seitenfläche der Trennwand nach Untergreifen von deren zur Schiene weisendem Ende ein Stück weit über die Ebene hinaus erstreckt, welche die zweite, von dem Schenkel weg weisende Seitenfläche der Trennwand beinhaltet. Es versteht sich, dass in diesem Fall der analog ausgebildete Abschnitt eines Schenkels des Magnetkerns eines benachbart angeordneten Zwischenglieds eine Grenze für die Längserstreckung des Abschnitts bildet, damit es zu keiner Verzwängung der Zwischenglieder kommen kann. Andererseits kann zugelassen werden, dass sich die benachbarten Zwischenglieder aneinander abstützen können.

Gegenüber üblichen Trennwänden des Stands der Technik weist/weisen bei der Erfindung die Trennwand bzw. weisen die Trennwände in einer Ebene senkrecht zur Längsrichtung des Magnetspulenkörpers und in vertikaler Richtung in Einbaulage gesehen bevorzugt eine geringere Höhe auf, indem von dem zur Schiene weisenden Ende der Trennwand bzw. der Trennwände ein Stück entfernt wird, damit der dieses Ende untergreifende Abschnitt des Magnetkerns möglichst groß ausfallen kann.

Erfindungsgemäß weist zumindest im Bereich des Polschuhs der Abschnitt in Längsrichtung des Magnetspulenkörpers gesehen eine Längserstreckung L1 auf, welche größer als die Längserstreckung X des Stegs ist. Der Begriff "Längserstreckung" bezieht sich dabei auf die Erstreckung in Richtung der Längsrichtung des Magnetspulenkörpers gesehen.

Weiterhin erfindungsgemäß weist ein von dem Polschuh abweichender Teil des Abschnitts eine Längserstreckung L2 auf, welche zum einen größer als die Längserstreckung L1 und zum andern größer als die Längserstreckung X des Stegs ist. Damit kommen als Vorteile zum Tragen, dass nämlich einerseits eine möglichst große Querschnittsfläche des von dem Polschuh abweichenden Teil des Abschnitts für einen größeren magnetischen Fluss vorliegt und andererseits eine Beabstandung der Polschuhe von benachbart angeordneten Schenkeln, um deren Verschweißung zu vermeiden.

Ein Vorteil der Erfindung liegt folglich darin, dass dann die Querschnittsfläche des Schenkels im Bereich des Abschnitts und damit auch die gesamte Querschnittsfläche des Schenkels des Magnetkerns vergrößert werden, wodurch der magnetische Fluss bei gleicher magnetischer Flussdichte erhöht wird. Andererseits kann dadurch auch die Auflagefläche des Polschuhs auf der Schiene vergrößert werden. Dies führt letztlich zu einer Erhöhung der Bremskräfte, welche von der Gliedermagnetschienenbremsvorrichtung ausgeübt werden können.

Durch die in den Unteransprüchen aufgeführten Maßnahmen sind vorteilhafte Weiterbildungen und Verbesserungen der in Anspruch 1 angegebenen Erfindung möglich.

Die Querschnittsfläche des Schenkels des Magnetkerns wird in vorteilhafter Weise noch weiter vergrößert, wenn besonders bevorzugt der Abschnitt des Schenkels die benachbarte Trennwand in Längsrichtung des Magnetspulenkörpers gesehen um ein Stück weit überragt.

Eine Verschweißung von Polschuhen benachbarter Schenkel aufgrund der bei der Reibung zwischen Polschuh und Schienenoberfläche entstehenden Hitze kann vermieden werden, wenn bevorzugt die Längserstreckung L1 des Abschnitts des Schenkels im Bereich des Polschuhs derart bemessen ist, dass zwischen den Polschuhen von Schenkeln benachbarter Zwischenglieder ein lichter Längsabstand vorhanden ist.

Beispielsweise weist in einer senkrecht zur Längsrichtung des Magnetspulenkörpers angeordneten Querschnittsebene gesehen der Schenkel einen vertikalen Teil, einen nach innen gebogen verlaufenden Teil sowie einen vertikalen Polschuhteil auf, wobei der Abschnitt des Schenkels, welcher die wenigstens eine benachbarte oder angrenzende Trennwand in Längsrichtung des Magnetspulenkörpers gesehen um ein Stück überragt wenigstens den nach innen gebogen verlaufenden Teil und den vertikalen Polschuhteil umfasst.

Bevorzugt ist der Magnetkern wenigstens zweiteilig ausgebildet, wobei ein erster Teil eine erste Hälfte des Stegs und einen ersten Schenkel und ein zweiter, von dem ersten Teil separater Teil eine zweite Hälfte des Stegs und einen zweiten Schenkel umfasst.

Dabei kann die erste Hälfte des Stegs des ersten Teils des Magnetkerns und die zweite Hälfte des Stegs des zweiten Teils des Magnetkerns in eine Durchgangsöffnung des Magnetspulenkörpers ragen und dort miteinander lösbar verbunden sein.

Generell kann der Magnetkern eine Spulenwicklung tragen oder ohne eigene Spulenwicklung ausgeführt sein.

Die Erfindung betrifft auch ein Schienenfahrzeug mit einer hierin beschriebenen Gliedermagnetschienenbremsvorrichtung.

Im Rahmen der Erfindung kann ein Schienenfahrzeug einen oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Ein Schienenfahrzeug oder ein Wagen des Schienenfahrzeugs kann Drehgestelle aufweisen, an denen Radachsen des Fahrzeugs angeordnet sind. Die Drehgestelle können an einem Wagenaufbau befestigt sein. Vorzugsweise ist dann eine hierin beschriebene Gliedermagnetschienenbremsvorrichtung an einem Drehgestell aufgehängt.

Die Erfindung wird nun mit Bezug auf die begleitenden Zeichnungen anhand einer bevorzugten Ausführungsform beispielhaft erläutert. Es zeigen:
- Fig.1: eine perspektivische Darstellung eines Bremsmagneten einer Gliedermagnetschienenbremsvorrichtung gemäß einer bevorzugten Ausführungsform;
- Fig. 2: eine perspektivische Darstellung eines Magnetspulenkörpers der Gliedermagnetschienenbremsvorrichtung von Fig.1 mit einem zwischen Zwischenwänden aufgenommenen Zwischenglied;
- Fig.3: eine Querschnittsdarstellung entlang der Ebene III-III von Fig.1 mit der Gliedermagnetschienenbremsvorrichtung in Gebrauchslage;
- Fig.4: eine Querschnittsdarstellung eines Bremsmagneten einer Gliedermagnetschienenbremsvorrichtung des Stands der Technik;
- Fig.5: eine Seitenansicht eines Magnetkerns eines Zwischenglieds der Gliedermagnetschienenbremsvorrichtung des Stands der Technik;
- Fig.6: eine Querschnittsdarstellung der Gliedermagnetschienenbremsvorrichtung entlang der Ebene V-V von Fig.1;
- Fig.7: eine Seitenansicht eines Magnetkerns eines Zwischenglieds der Gliedermagnetschienenbremsvorrichtung von Fig.1;

### Beschreibung des Ausführungsbeispiels

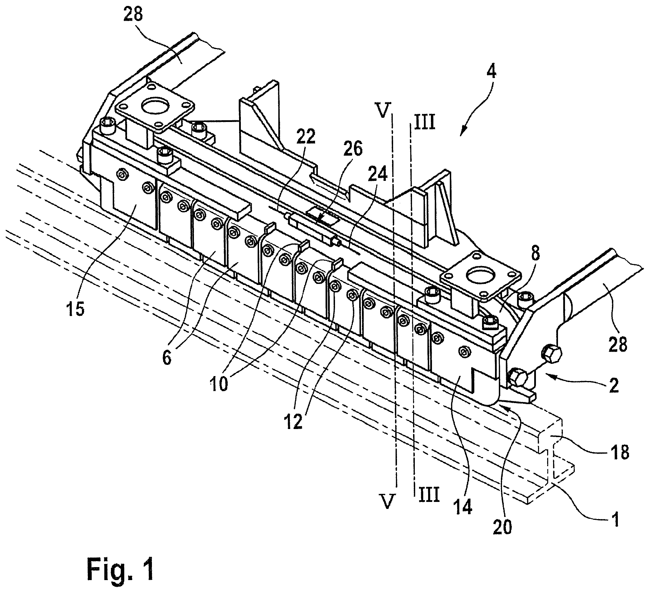

Um sich besser an Unebenheiten einer Schiene 1 eines Gleises anpassen zu können, sind bei einer in **Fig.1** dargestellten Ausführungsform eines Bremsmagneten 2 einer bevorzugten Ausführungsform einer Gliedermagnetschienenbremsvorrichtung 4 mehrere Zwischenglieder 6 vorhanden, welche an einem sich in Längsrichtung der Schiene 1 erstreckenden Magnetspulenkörper 8 begrenzt beweglich gehalten sind. Dies ist vorzugsweise dadurch gelöst, dass die Zwischenglieder Magnetglieder 6 symmetrisch zu einer vertikalen Mittelebene an den voneinander weg weisenden Seitenflächen des Magnetspulenkörpers 8 in zwischen Trennwänden 10 gebildeten Kammern 11 begrenzt kipp- bzw. schwenkbar aufgehängt sind. Jeweils endseitig sind an dem Magnetspulenkörper 8 Endglieder 14, 15 angeordnet.

In **Fig.1** ist aus Maßstabsgründen lediglich einer der mit einer Schiene 1 zusammen wirkenden Bremsmagnete 2 gezeigt, wobei aber spiegelsymmetrisch in Bezug auf eine senkrechte Längsmittelebene der beiden Schienen des Gleises ein weiterer, hier nicht sichtbarer Bremsmagnet vorhanden ist. Die beiden Bremsmagneten sind dann über Querstreben miteinander verbunden. Mittels einer hier nur teilweise gezeigten Befestigungsvorrichtung sind die Bremsmagneten an einer Hubvorrichtung befestigt, welche einen vertikalen Hub der Bremsmagneten bewirkt, um die Zwischenglieder 6 in Kontakt mit einem Schienenkopf 18 der jeweiligen Schiene 1 zu bringen. Die Hubvorrichtung ist wiederum an einem Drehgestell des Schienenfahrzeugs gehalten.

Die Übertragung der Bremskräfte auf den Magnetspulenkörper 8 erfolgt dann von der Kontaktstelle der Zwischenglieder 6 über die Trennwände 10 und Endstücke 14, 15, die starr mit dem Magnetspulenkörper 8 verbunden sind und dem Bremsmagnet 2 über Weichen und Schienenstößen eine gute Führung geben. Der Magnetspulenkörper 8, der wenigstens eine von außen nicht sichtbare Magnetspule 9 trägt, trägt folglich die Zwischenglieder 6, welche zusammen einen Magnetkern des Bremsmagneten 2 bilden.

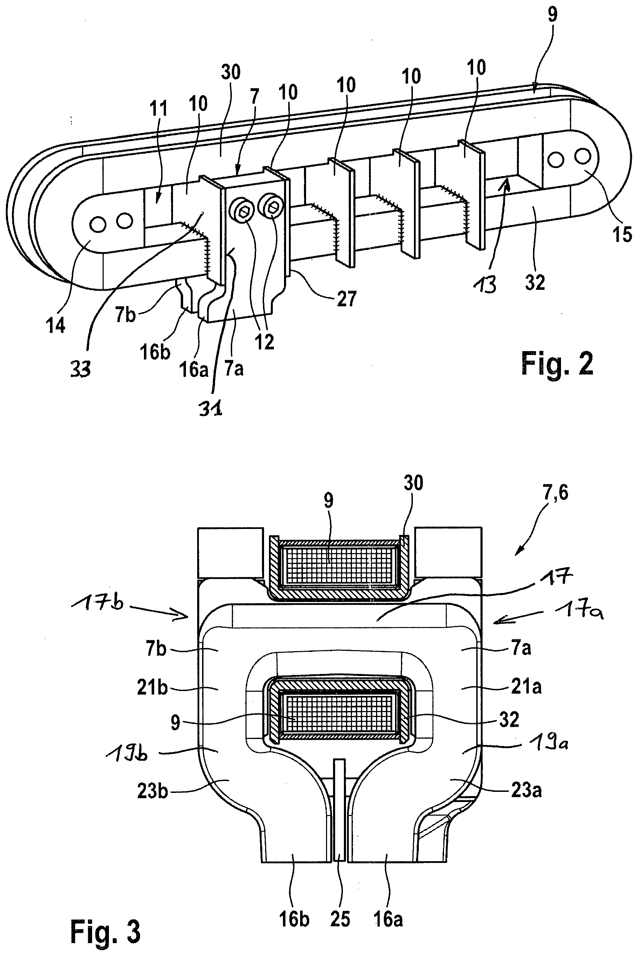

In **Fig.2** ist der Magnetspulenkörper 8 in einer perspektivischen Darstellung dargestellt. Der Magnetspulenkörper 8 dient zur Aufnahme der zur Erzielung des notwendigen elektromagnetischen Flusses erforderlichen Wicklungen der Magnetspule 9. In einer Durchgangsöffnung 13 des Magnetspulenkörpers 8, die oval oder rechteckig ausgeführt sein kann, sind in gleichmäßigen Abständen die Trennwände 10 verteilt und am Magnetspulenkörper 8 in ihren Stellungen fixiert. Zwischen je zwei derartigen Trennwänden 10 werden im Querschnitt hufeisenförmige, den magnetischen Fluss aufnehmende Magnetkerne 7 der Zwischenglieder 6 die Durchgangsöffnung 13 eingesetzt.

Wie insbesondere **Fig.3** veranschaulicht, weist ein solcher Magnetkern 7 einen die Durchgangsöffnung 13 durchgreifenden und in Gebrauchslage horizontalen Steg 17 und von dem Steg etwa senkrecht vertikal nach unten, d.h. zu einem Schienenkopf 18 der Schiene 1 hin ragende Schenkel 19a, 19b auf. Ein solcher Magnetkern umgreift dann mit seinem Steg 17 und seinen Schenkeln einen Unterzug 32 des Magnetspulenkörpers 8. Ein Oberzug 30, der Unterzug 32 sowie die Endglieder des Magnetspulenkörpers 8 sind jeweils als U-Profilschiene ausgebildet, wobei in einer nutartigen, nach außen hin offenen Vertiefung die Wicklung der Magnetspule 9 umlaufend angeordnet ist.

Die Magnetkerne 7 weisen jeweils zwei entlang einer Längsmittelebene des Magnetspulenkörpers getrennte Teile auf, von welchen ein erster Teil 7a eine erste Hälfte 17a des Stegs 17 und einen ersten Schenkel 19a und ein zweiter, von dem ersten Teil 7a separater Teil 7b eine zweite Hälfte 17b des Stegs 17 und einen zweiten Schenkel 19b umfasst. Die beiden Teile 7a und 7b werden durch eine Schraubverbindung 12, welche die beiden Hälften 17a, 17b des Stegs 17 durchdringt, miteinander fest verbunden.

Wie am besten **Fig.3** zeigt, sind die Zwischenglieder 6 bzw. deren Magnetkerne 7 am Magnetspulenkörper 8 derart festgelegt, dass ihre der Schiene 1 zugewandten Schenkel 19a, 19b über den Magnetspulenkörper 8 hinausragen. Dabei weist in einer senkrecht zur Längsrichtung des Magnetspulenkörpers 8 angeordneten Querschnittsebene gesehen jeder der Schenkel 19a, 19b einen vertikalen Teil 21a, 21b, einen nach innen gebogen verlaufenden Teil 23a, 23b sowie einen vertikalen Polschuh 16a, 16b auf, welche dann Nord- und Südpol des Bremsmagneten 2 ausbilden. Zwischen den Polschuhen 16a, 16b und einem Schienenkopf 18 der Schiene 1 ist in der gelösten Stellung der Gliedermagnetschienenbremsvorrichtung 4 ein Luftspalt 20 vorhanden (**Fig**.**1**).

Die Polschuhe 16a, 16b bestehen bevorzugt aus einem Reibwerkstoffmaterial, z.B. aus Stahl, Sphäroguss oder aus Sinterwerkstoffen. In einem Zwischenraum zwischen den beiden Polschuhen 16a, 16b kann eine den Zwischenraum ausfüllende amagnetische, verschleißfeste, stoßfeste und temperaturbeständige Zwischenleiste 25 angeordnet sein.

Um die Magnetspule 9 mit elektrischer Spannung zu versorgen, ist eine wenigstens zwei elektrische Anschlüsse 22, 24 für den Plus- bzw. Minuspol einer Spannungsquelle aufweisende Anschlusseinrichtung 26 vorhanden, welche beispielsweise im oberen Bereich einer Seitenfläche des Magnetspulenkörpers 8, bezogen auf dessen Längserstreckung etwa mittig angeordnet ist. Die elektrischen Anschlüsse 22, 24 weisen bevorzugt voneinander weg und erstrecken sich in Längsrichtung des Magnetspulenkörpers 8.

Zur Durchführung einer Bremsung werden die beiden Bremsmagneten 2 der Gliedermagnetschienenbremsvorrichtung 4 durch die hier nicht gezeigte Hubvorrichtung auf die Schienen1 herabgesenkt und die Spulenwicklung der Magnetspule bestromt, so dass der Stromfluss in den Magnetkernen 7 einen magnetischen Fluss erzeugt, der durch die beiden Teile 7a, 7b und den Schienenkopf 18 geschlossen wird. Die Polschuhe 16a, 16b werden infolgedessen in einer dem magnetischen Fluss entsprechenden Stärke auf den Schienenkopf 18 herabgezogen und an denselben angepresst. Die in Richtung der Längsachse der Magnetspulenkörper 8 vorhandene Beweglichkeit der Magnetkerne 7 lässt diese auch auf verschieden abgenutzten Schienenköpfen 18 plan aufliegen und den gewünschten magnetischen Fluss sowie über den Reibschluss zwischen den Polschuhen 16a, 16b und dem Schienenkopf 18 dann die Bremskraft zustande kommen. Die Trennwände 10 nehmen die durch die Reibung zwischen den Magnetkerne 7 und dem Schienenkopf 18 entstehenden Bremskräfte auf und leiten sie an den Magnetspulenkörper 8 weiter, von welchem sie auf die Befestigungsvorrichtung und die Hubvorrichtung und von dort auf das Drehgestell übertragen werden.

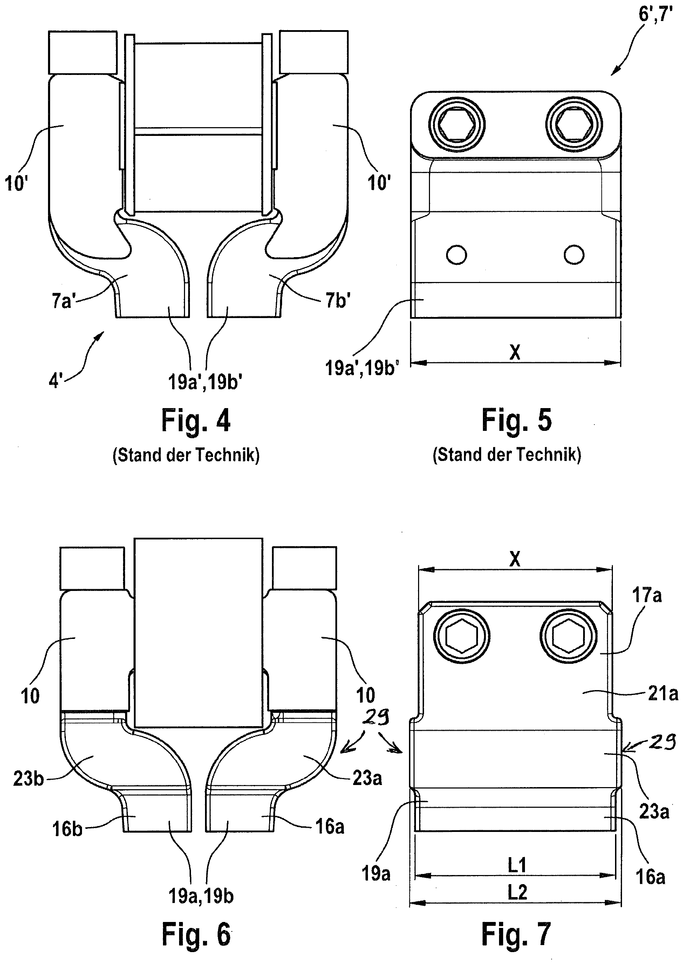

**Fig.4** und **Fig.5** zeigen eine Querschnittsdarstellung eines Bremsmagneten 2' einer Gliedermagnetschienenbremsvorrichtung 4' des Stands der Technik bzw. eine Seitenansicht eines Magnetkerns 7' eines Zwischenglieds 6' der Gliedermagnetschienenbremsvorrichtung 4' des Stands der Technik. Wie dort erkennbar ist die Längserstreckung der beiden Teile 7a', 7b' durch den Längsabstand der den Magnetkern 7' umgebenden Trennwände 10' beschränkt, d.h. dass der Magnetkern 7' in Längsrichtung gesehen nicht über die Trennwände 10' hinaus ragt. Die Trennwände 10' sind zudem relativ weit in Richtung Schienenkopf 18 herunter gezogen. Der Magnetkern 7' weist dann im Bereich der Schenkel 19a', 19b' eine Längserstreckung X auf, welche durchgehend kleiner als der Längsabstand der beiden benachbarten oder angrenzenden Trennwände 10' ist.

Im Gegensatz dazu sind bei der Ausführungsform gemäß **Fig.6** und **Fig.7** die weisen in einer Ebene senkrecht zur Längsrichtung des Magnetspulenkörpers 8 und in vertikaler Richtung in Einbaulage gesehen die Trennwände 10 eine geringere Höhe auf, weil von den zur Schiene 1 weisenden Enden 27 der Trennwände 10 ein Stück entfernt wurde. Folglich kann ein Abschnitt 29 des Magnetkerns 7 und genauer bevorzugt die nach innen gebogen verlaufenden Teile 23a, 23b sowie die hier beispielsweise vertikalen Polschuhe 16a, 16b der Schenkel 19a, 19b dieses Ende 27 jeweils untergreifen.

Bevorzugt überragt hier der Abschnitt 29 des Magnetkerns 7 die benachbarten Trennwände 10 in Längsrichtung des Magnetspulenkörpers 8 gesehen jeweils um ein Stück weit, d.h. beidseitig. Es kann aber auch vorgesehen werden, dass der Abschnitt 29 des Magnetkerns 7 bzw. seiner Schenkel 19a, 19b lediglich eine der beiden angrenzenden oder benachbarten Trennwände 10 in Längsrichtung überragt.

In Längsrichtung des Magnetspulenkörpers 8 gesehen erstreckt sich daher der Abschnitt 29 der Schenkel 19a, 19b von der zu den Schenkeln 19a, 19b weisenden ersten Seitenfläche 31 einer benachbarten oder angrenzenden Trennwand 10 nach Untergreifen von deren zur Schiene 1 weisenden Endes 27 ein Stück weit über die Ebene hinaus, welche eine zweite, von den Schenkeln 19a, 19b weg weisende Seitenfläche 33 der Trennwand 10 beinhaltet (**Fig**.**2**). Dies gilt dann bevorzugt für beide senkrecht zur Längsrichtung angeordneten Stirnseiten der beiden Abschnitte 29 des jeweiligen Magnetkerns 7 und die ihn einfassenden Trennwände 10.

Im Bereich der Polschuhe 16a, 16b weisen die nach innen gebogen verlaufenden Teile 23a, 23b der Schenkel 19a, 19b als Teil des Abschnitts 29 in Längsrichtung des Magnetspulenkörpers 8 gesehen eine Längserstreckung L2 auf, welche größer als die Längserstreckung X des Stegs 17 ist, wie in **Fig.7** veranschaulicht ist.

Weiterhin bevorzugt ist die Längserstreckung L1 der sich an die nach innen gebogen verlaufenden Teile 23a, 23b anschließenden Polschuhe 16a, 16b als weiterer Teil des Abschnitts 29 derart bemessen, dass zwischen den Polschuhen 16a, 16b von Schenkeln 19a, 19b in Längsrichtung gesehen benachbarter Zwischenglieder 6 ein lichter Längsabstand vorhanden ist.

Bevorzugt ist dann die Längserstreckung L2 die nach innen gebogen verlaufenden Teile 23a, 23b der Schenkel 19a, 19b größer als die Längserstreckung L1 der Polschuhe 16a, 16b, wobei sowohl die Längserstreckung L1 als auch die Längserstreckung L2 jeweils größer als die Längserstreckung X des Stegs 17 ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

Der Vorteil der gegenüber dem Stand der Technik verlängerten Längserstreckungen L1 und L2 liegt darin, dass dann die Querschnittsflächen der Schenkel 19a, 19b im Bereich des Abschnitts 29 und damit auch die gesamten Querschnittsflächen der Schenkel 19a, 19b der Magnetkerne 7 vergrößert werden, wodurch der magnetische Fluss bei gleicher magnetischer Flussdichte erhöht wird. Andererseits kann dadurch auch die Auflagefläche der Polschuhe 16a, 16b auf dem Schienenkopf 18 vergrößert werden. Dies führt letztlich zu einer Erhöhung der Bremskräfte, welche von der Gliedermagnetschienenbremsvorrichtung 4 ausgeübt werden können.

### Bezugszeichenliste

- 1: Schiene
- 2: Bremsmagneten
- 4: Gliedermagnetschienenbremsvorrichtung
- 6: Zwischenglieder
- 7: Magnetkerne
- 8: Magnetspulenkörper
- 9: Magnetspule
- 10: Trennwände
- 11: Kammer
- 12: Schraubverbindung
- 13: Durchgangsöffnung
- 14: Endglied
- 15: Endglied
- 16a/b: Polschuhe
- 17: Steg
- 17a/b: Hälfte
- 18: Schienenkopf
- 19a,b: Schenkel
- 20: Luftspalt
- 21a/b: vertikaler Teil
- 22: elektr. Anschluss
- 23a/b: nach innen gebogen verlaufender Teil
- 24: elektr. Anschluss
- 25: Zwischenleiste
- 26: Anschlusseinrichtung
- 27: Ende
- 28: Querstreben
- 29: Abschnitt
- 30: Oberzug
- 31: erste Seitenfläche
- 32: Unterzug
- 33: zweite Seitenfläche
- L1: Längserstreckung
- L2: Längserstreckung
- X: Längserstreckung

## Patentansprüche

1. Gliedermagnetschienenbremsvorrichtung (4) eines Schienenfahrzeugs mit wenigstens einem Bremsmagneten (2), wobei
a) der Bremsmagnet (2) einen Magnetspulenkörper (8) sowie zwei mit dem Magnetspulenkörper (8) starr verbundene Endglieder (14, 15) und mehrere jeweils mit dem Magnetspulenkörper (8) begrenzt beweglich verbundene und in Längsrichtung des Magnetspulenkörpers (8) gesehen hintereinander angeordnete Zwischenglieder (6) aufweist, und wobei
b) zwischen zwei benachbarten Zwischengliedern (6) jeweils eine Trennwand (10) angeordnet ist, und wobei
c) ein Zwischenglied (6) einen in einer senkrecht zur Längsrichtung des Magnetspulenkörpers (8) angeordneten Querschnittsebene gesehen hufeisenförmigen Magnetkern (7) mit einem Steg (17) und zwei sich von dem Steg (17) weg erstreckende Schenkel (19a, 19b) aufweist, wobei
d) an jeweils einem zu einer Schiene (1) weisenden Ende eines Schenkels (19a, 19b) ein zum Reibkontakt mit der Schiene (1) vorgesehener Polschuh (16a, 16b) ausgebildet ist, wobei
e) bei wenigstens einem Schenkel (19a, 19b) eines Magnetkerns (7) wenigstens eines Zwischenglieds (6) zumindest ein zur Schiene (1) weisender Abschnitt (29) des Schenkels (19a, 19b) ein zur Schiene (1) weisendes Ende (27) wenigstens einer benachbarten oder angrenzenden Trennwand (10) in Längsrichtung des Magnetspulenkörpers (8) gesehen untergreift, und
f) zumindest im Bereich des Polschuhs (16a, 16b) der Abschnitt (29) in Längsrichtung des Magnetspulenkörpers (8) gesehen eine Längserstreckung (L1) aufweist, welche größer als die Längserstreckung (X) des Stegs (17) ist, **dadurch gekennzeichnet, dass**
g) ein von dem Polschuh (16a, 16b) abweichender Teil des Abschnitts (29) eine Längserstreckung (L2) aufweist, welche zum einen größer als die Längserstreckung (L1) und zum andern größer als die Längserstreckung (X) des Stegs (17) ist.

2. Gliedermagnetschienenbremsvorrichtung nach Anspruch 1, **dadurch gekennzeichnet, dass** der Abschnitt (29) des Schenkels (19a, 19b) die wenigstens eine benachbarte oder angrenzende Trennwand (10) in Längsrichtung des Magnetspulenkörpers (8) gesehen überragt.

3. Gliedermagnetschienenbremsvorrichtung nach Anspruch 1 oder 2, **dadurch gekennzeichnet, dass** die Längserstreckung (L1) des Abschnitts (29) des Schenkels (19a, 19b) im Bereich des Polschuhs (16a, 16b) derart bemessen ist, dass zwischen den Polschuhen (16a, 16b) von Schenkeln (19a, 19b) benachbarter Zwischenglieder (6) ein Längsabstand vorhanden ist.

4. Gliedermagnetschienenbremsvorrichtung nach einem der vorhergehenden Ansprüche, **dadurch gekennzeichnet, dass** in einer senkrecht zur Längsrichtung des Magnetspulenkörpers (8) angeordneten Querschnittsebene gesehen der Schenkel (19a, 19b) einen vertikalen Teil (21a, 21b), einen nach innen gebogen verlaufenden Teil (23a, 23b) sowie einen vertikalen Polschuhteil (16a, 16b) aufweist, wobei der Abschnitt (29) des Schenkels (19a, 19b), welcher die wenigstens eine benachbarte oder angrenzende Trennwand (10) des Schenkels (19a, 19b) in Längsrichtung des Magnetspulenkörpers (8) gesehen um ein Stück überragt wenigstens den nach innen gebogen verlaufenden Teil (23a, 23b) und den vertikalen Polschuhteil (16a, 16b) umfasst.

5. Gliedermagnetschienenbremsvorrichtung nach Anspruch 4, **dadurch gekennzeichnet, dass** der von dem Polschuh (16a, 16b) abweichende Teil des Abschnitts (29) des Schenkels (19a, 19b) den nach innen gebogen verlaufenden Teil (23a, 23b) des Schenkels (19a, 19b) umfasst oder von diesem gebildet wird.

6. Gliedermagnetschienenbremsvorrichtung nach einem der vorhergehenden Ansprüche, **dadurch gekennzeichnet, dass** der Magnetkern (7) wenigstens zweiteilig ausgebildet ist, wobei ein erster Teil (7a) eine erste Hälfte (17a) des Stegs (17) und einen ersten Schenkel (19a) und ein zweiter, von dem ersten Teil (7a) separater Teil (7b) eine zweite Hälfte (17b) des Stegs (17) und einen zweiten Schenkel (19b) umfasst.

7. Gliedermagnetschienenbremsvorrichtung nach Anspruch 6, **dadurch gekennzeichnet, dass** wobei die erste Hälfte (17a) des Stegs (17) des ersten Teils (7a) des Magnetkerns (7) und die zweite Hälfte (17b) des Stegs (17) des zweiten Teil (7b) des Magnetkerns (7) in eine Durchgangsöffnung (13) des Magnetspulenkörpers (8) ragen und dort miteinander lösbar verbunden sind.

8. Gliedermagnetschienenbremsvorrichtung nach einem der vorhergehenden Ansprüche, **dadurch gekennzeichnet, dass** der Magnetspulenkörper (8) eine Spulenwicklung trägt oder ohne eigene Spulenwicklung ausgeführt ist.

9. Schienenfahrzeug mit wenigstens einer Gliedermagnetschienenbremsvorrichtung nach wenigstens einem der vorhergehenden Ansprüche.

## Claims

1. Articulated magnetic rail brake device (4) of a rail vehicle having at least one brake magnet (2), wherein
a) the brake magnet (2) has a magnetic coil body (8) and two end members (14, 15) rigidly connected to the magnetic coil body (8) and also a plurality of intermediate members (6) each connected in a limitedly movable manner to the magnetic coil body (8) and arranged one behind the other as seen in the longitudinal direction of the magnetic coil body (8), and wherein
b) a partition (10) is arranged between each two adjacent intermediate members (6), and wherein
c) an intermediate member (6) has a magnetic core (7) that is horseshoe-shaped as seen in a cross-sectional plane arranged perpendicular to the longitudinal direction of the magnetic coil body (8), said horseshoe-shaped magnetic core (7) having a web (17) and two legs (19a, 19b) extending away from the web (17), wherein
d) a pole shoe (16a, 16b) provided for frictional contact with the rail (1) is formed at each end of a leg (19a, 19b) pointing towards a rail (1), wherein
e) in the case of at least one leg (19a, 19b) of a magnetic core (7) of at least one intermediate member (6), at least a portion (29) of the leg (19a, 19b) pointing towards the rail (1) engages under an end (27), pointing towards the rail (1), of at least one adjacent or abutting partition (10) as seen in the longitudinal direction of the magnetic coil body (8), and
f) at least in the region of the pole shoe (16a, 16b), the portion (29) has, as seen in the longitudinal direction of the magnetic coil body (8), a longitudinal extension (L1) which is greater than the longitudinal extension (X) of the web (17),
**characterised in that**
g) a part, deviating from the pole shoe (16a, 16b), of the portion (29) has a longitudinal extension (L2) which is on the one hand greater than the longitudinal extension (L1) and on the other hand greater than the longitudinal extension (X) of the web (17).

2. Articulated magnetic rail brake device according to claim 1, **characterised in that** the portion (29) of the leg (19a, 19b) projects over the at least one adjacent or abutting partition (10) as seen in the longitudinal direction of the magnetic coil body (8).

3. Articulated magnetic rail brake device according to claim 1 or 2, **characterised in that** the longitudinal extension (L1) of the portion (29) of the leg (19a, 19b) has such dimensions in the region of the pole shoe (16a, 16b) that there is a longitudinal space between the pole shoes (16a, 16b) of legs (19a, 19b) of adjacent intermediate members (6).

4. Articulated magnetic rail brake device according to one of the preceding claims, **characterised in that** seen in a cross-sectional plane arranged perpendicular to the longitudinal direction of the magnetic coil body (8) the leg (19a, 19b) has a vertical part (21a, 21b), a part (23a, 23b) extending inwards in a curved manner and a vertical pole shoe part (16a, 16b), wherein the portion (29) of the leg (19a, 19b) which projects slightly over, as seen in the longitudinal direction of the magnetic coil body (8), the at least one adjacent or abutting partition (10) of the leg (19a, 19b) includes at least the part (23a, 23b) extending inwards in a curved manner and the vertical pole shoe part (16a, 16b).

5. Articulated magnetic rail brake device according to claim 4, **characterised in that** the part, deviating from the pole shoe (16a, 16b), of the portion (29) of the leg (19a, 19b) includes or is formed by the part (23a, 23b) of the leg (19a, 19b) that extends inwards in a curved manner.

6. Articulated magnetic rail brake device according to one of the preceding claims, **characterised in that** the magnetic core (7) is formed in at least two parts, wherein a first part (7a) includes a first half (17a) of the web (17) and a first leg (19a), and a second part (7b) that is separate form the first part (7a) includes a second half (17b) of the web (17) and a second leg (19b).

7. Articulated magnetic rail brake device according to claim 6, **characterised in that** the first half (17a) of the web (17) of the first part (7a) of the magnetic core (7) and the second half (17b) of the web (17) of the second part (7b) of the magnetic core (7) project into a through opening (13) of the magnetic coil body (8) and are detachably interconnected there.

8. Articulated magnetic rail brake device according to one of the preceding claims, **characterised in that** the magnetic coil body (8) carries a coil winding or is configured without its own coil winding.

9. Rail vehicle having at least one articulated magnetic rail brake device according to at least one of the preceding claims.

## Revendications

1. Dispositif (4) de frein magnétique sur rail à maillons d'un véhicule ferroviaire comprenant au moins un aimant (2) de frein, dans lequel
a) l'aimant (2) de frein a un corps (8) de bobine d'électroaimant, ainsi que deux maillons (14, 15) d'extrémité reliés rigidement au corps (8) de la bobine d'électroaimant et plusieurs maillons (6) intermédiaires reliés d'une manière mobile limitée respectivement au corps (8) de la bobine d'électroaimant et disposés les uns derrières les autres, considéré dans la direction longitudinale du corps (8) de la bobine d'électroaimant, et dans lequel
b) entre deux maillons (6) intermédiaires voisins, est disposée respectivement une paroi (10) de cloisonnement et dans lequel
c) un maillon (6) intermédiaire a un noyau (7) d'aimant en forme de fer à cheval, considéré dans un plan de section transversale disposé perpendiculairement à l'axe longitudinal du corps (8) de la bobine d'électroaimant, en ayant une âme (17) et deux branches (19a, 19b) s'éloignant de l'âme (17), dans lequel
d) à respectivement une extrémité, tournée vers un rail (1), d'une branche (19a, 19b), est constitué un épanouissement (16a, 16b) polaire prévu pour le contact de frottement avec le rail (1), dans lequel
e) pour au moins l'une des branches (19a, 19b) d'un noyau (7) d'aimant, moins une partie (29), tournée vers le rail (1), de la branche (19a, 19b) prend par en-dessous, considéré dans la direction longitudinale du corps (8) de la bobine d'électroaimant, au moins une extrémité (27), tournée vers le rail (1) d'une paroi (10) de cloisonnement voisine ou adjacente et
f) au moins dans la partie de l'épanouissement (16a, 16b) polaire, la partie (29) a, considéré dans la direction longitudinale du corps (8) de la bobine d'électroaimant, une étendue (L1) en longueur, qui est plus grande que l'étendue (X) en longueur de l'âme (17), **caractérisé en ce que**
g) une partie, se distinguant de l'épanouissement (16a, 16b) polaire, de la partie (29) a une étendue (L2) en longueur, qui, d'une part, est plus grande que l'étendue (L1) en longueur, et, d'autre part, est plus grande que l'étendue (X) en longueur de l'âme (17).

2. Dispositif de frein électromagnétique sur rail à maillons suivant la revendication 1, **caractérisé en ce que** la partie (29) de la branche (19a, 19b) dépasse, considéré dans la direction longitudinale du corps (8) de la bobine d'électroaimant, la au moins une paroi (10) de cloisonnement voisin ou adjacente.

3. Dispositif de frein magnétique sur rail à maillons suivant la revendication 1 ou 2, **caractérisé en ce que** l'étendue (L1) en longueur de la partie (29) de la branche (19a, 19b) est telle, dans la région de l'épanouissement (16a, 16b) polaire, qu'il y a une distance en longueur entre les épanouissements (16a, 16b) polaires de branches (19a, 19b) de maillons (6) intermédiaires voisins.

4. Dispositif de frein magnétique sur rail à maillons suivant l'une des revendications précédentes, **caractérisé en ce que**, considéré dans un plan de section transversale disposé perpendiculairement à la direction longitudinale du corps (8) de la bobine d'électroaimant, la branche (19a, 19b) a une partie (21a, 21b) verticale, une partie (23a, 23b) s'étendant en étant courbée vers l'intérieur, ainsi qu'une partie (16a, 16b) verticale d'épanouissement polaire, la partie (29) de la branche (19a, 19b), qui dépasse un peu, considéré dans la direction longitudinale du corps (8) de la bobine d'électroaimant, de la au moins une paroi (10) de cloisonnement voisine ou adjacente de la branche (19a, 19b), comprenant au moins la partie (23a, 23b), s'étendant en étant courbée vers l'intérieur, et la partie (16a, 16b) verticale d'épanouissement polaire.

5. Dispositif de frein magnétique sur rail à maillons suivant la revendication 4, **caractérisé en ce que** la partie, se distinguant de l'épanouissement (16a, 16b) polaire, de la partie (29) de la branche (19a, 19b) comprend la partie (23a, 23b), s'étendant en étant courbée vers l'intérieur, de la branche (19a, 19b) ou en est formée.

6. Dispositif de frein magnétique sur rail à maillons suivant l'une des revendications précédentes, **caractérisé en ce que** le noyau (7) d'aimant est constitué en au moins deux parties, une première partie (7a) comprenant une moitié (17a) de l'âme (17) et une première branche (19a) et une deuxième partie (7b) distincte de la première partie (7a) comprenant une deuxième moitié (17b) de l'âme (17) et une deuxième branche (19b).

7. Dispositif de frein magnétique sur rail à maillons suivant la revendication 6, **caractérisé en ce que** la première partie (7a) du noyau (7) d'aimant et la deuxième moitié (17b) de l'âme (17) de la deuxième partie (7b) du noyau (7) d'aimant pénètrent dans une ouverture (13) de passage du corps (8) de la bobine d'électroaimant et y sont reliées entre elles de manière amovible.

8. Dispositif de frein magnétique sur rail à maillons suivant l'une des revendications précédentes, **caractérisé en ce que** le corps (8) de la bobine d'électroaimant porte un enroulement de bobine ou est réalisé sans enroulement de bobine propre.

9. Véhicule ferroviaire, ayant au moins un dispositif de frein électromagnétique sur rail à maillons suivant au moins l'une des revendications précédentes.
